# EUROPÄISCHE PATENTSCHRIFT

(11) **EP 0 628 236 B1**
(45) Veröffentlichungstag und Bekanntmachung des Hinweises auf die Patenterteilung: **27.11.1996**
(21) Anmeldenummer: 94108211.7
(22) Anmeldetag: 28.05.1994
(51) Int. Cl.: A01B 63/22

(54) **Höhenverstellbares Gerät**
Height-adjustable device
Dispositif réglable en hauteur

(30) Priorität: 09.06.1993 US 74233
(43) Veröffentlichungstag der Anmeldung: 14.12.1994
(73) Patentinhaber: DEERE & COMPANY, Moline, Illinois 61265 (US)
(72) Erfinder: Payne, David Alan, Urbandale, Iowa 50322 (US)
(74) Vertreter: Feldmann, Bernhard

(56) Entgegenhaltungen:
- DE-A- 3 139 936
- FR-A- 2 434 551
- GB-A- 2 145 611
- US-A- 2 606 532

## Beschreibung

Die Erfindung bezieht sich auf ein einen Rahmen aufweisendes Gerät, insbesondere landwirtschaftliches Bodenbearbeitungsgerät, mit einer einen Hubzylinder aufweisenden Hubeinrichtung zum Verstellen des Rahmens zwischen einer Transportstellung und wenigstens einer Arbeitsstellung und mit einer einstellbaren Tiefensteuerung für die jeweilige Arbeitsstellung, die eine in Abhängigkeit von der Stellung der Kolbenstange des Hubzylinders mittel- oder unmittelbar verstellbare Schwinge und ein Ventil mit einem Betätigungselement aufweist, wobei das Ventil mit dem Hubzylinder und mit einer Druckquelle verbunden ist und bei einer vorgegebenen Verstellung des Betätigungselementes durch die Schwinge eine Bewegung der Kolbenstange in wenigstens eine Richtung blockiert.

Geräte wie sie aus der US-A-5 152 347 bekannt sind, können als Scheibeneggen oder als Kultivatoren ausgebildet sein. Sie sind in der Regel an einen Schlepper anhängbar, stützen sich auf Laufrädern ab und weisen eine Hubwelle auf, die durch mindestens einen Hubzylinder drehbar ist. Über einen am Gerät vorgesehenen Wandler werden in Abhängigkeit von der jeweiligen Höhe des Gerätes unterschiedliche Signale abgegeben. Der das Gerät ziehende Schlepper ist mit einem hydraulischen System ausgestattet und das Steuerventil ist zwischen dieses System und den Hubzylinder geschaltet. Die Bodenbearbeitungswerkzeuge des Gerätes arbeiten entsprechend der jeweiligen Anforderungen in unterschiedlichen Bodentiefen. Am Ende eines Feldes, wenn Schlepper und Gerät gewendet werden, wird das Gerät in seine Transportstellung verstellt und danach wieder abgesenkt. Das Wiederauffinden der genauen Arbeitstiefe bereitet dabei nicht unerhebliche Schwierigkeiten, weil der Tiefenbereich, in dem das Arbeitsgerät im Boden arbeiten kann, im Vergleich zu dem Verstellbereich für den Transport relativ klein ist.

Bei dem Gerät, von dem die Erfindung ausgeht (US-A-2 606 532), ist die Schwinge etwa in ihrer Mitte am Gehäuse des Hubzylinders angeordnet und mit ihrem einen Ende über eine Kette mit dem Ende der Kolbenstange verbunden. Das andere Ende der Schwinge kommt, wenn die Kolbenstange eine bestimmte Stellung erreicht hat, gegen das Betätigungselement zur Anlage und verstellt dieses derart, daß ein Ventilsitz über ein Ventil geschlossen wird. Das Ventil ist in das Gehäuse des Hubzylinders integriert und blockiert in einem geschlossenen Zustand den Hubzylinder. Die Stellungen, in denen die Schwinge gegen das Betätigungselement zur Anlage kommen können, sind dadurch variierbar, daß durch eine Bedienungsperson die wirksame Länge der Kette verlängert oder verkürzt werden kann. Dies ist allerdings schwierig durchzuführen, da der Hubzylinder immer an schwer zugänglichen Stellen angeordnet ist. Wird die Kolbenstange in den Hubzylinder eingefahren, so hängt die Kette nach unten durch und kommt mit dem zu bearbeitenden Gut oder sogar mit dem Erdreich in Berührung oder kann sich verklemmen, was in jedem Fall zu Betriebsstörungen führt. Dadurch, daß das den Hubzylinder blockierende Ventil in dessen Gehäuse angeordnet ist, können keine Normalausführungen Verwendung finden, was andererseits kostenaufwendig ist. Bei eventuellen Störungen müssen Hubzylinder und Ventil ausgewechselt werden.

In dem gattungsmäßig berücksichtigten Dokument ist auch eine Tiefensteuerung ohne Kette offenbart. Bei dieser Variante findet an Stelle der Kette und der Schwinge ein auf der Kolbenstange aufsitzender und auch auf dieser verstellbarer Betätigungsring Verwendung, der bei eingefahrener Kolbenstange das Betätigungselement des wiederum im Gehäuse des Hubzylinders angeordneten Ventils verstellt. Auch hier ist der Hubzylinder wieder äußerst aufwendig gestaltet. Der Betätigungsring ist schlecht zugänglich und schwer und ungenau verstellbar. Da die Impulse direkt am Hubzylinder abgenommen werden, wird die Steuerung ungenau, wenn die Lagerstellen der Hubwellen, die zu einem relativ schnellen Ausschlagen neigen, verschleißen.

Die mit der Erfindung zu lösende Aufgabe wird in einer einfachen und möglichst störungsunanfälligen Einrichtung zur Einstellung der jeweiligen Arbeitsstellung gesehen, wobei die einmal eingestellte Stellung auch leicht wieder aufgefunden werden kann. Hierzu sieht die Erfindung vor, daß die Schwinge am Rahmen angelenkt ist und ein Betätigungsglied aufnimmt, das mit der Schwinge verstellbar ist, bei Verstellung der Schwinge das Betätigungselement des Ventils verstellen kann und gegenüber der Schwinge von einer Stelle aus verstellbar ist, die von der Schwinge ab liegt. Hierdurch wird beispielsweise bei einem Einfahren des Hubzylinders die Schwinge verstellt, die unmittelbar auf das Steuerventil derart wirken kann, daß eine weitere Bewegung des Kolbens in dem Hubzylinder unterbrochen wird. Andererseits soll diese Losung nicht die Möglichkeit ausschließen, daß die Kolbenstange an einem Festpunkt angreift und sich der Zylinder selbst bewegt, der in einem solchen Fall dann die Schwinge betätigen würde. In jedem Fall sind zur Einstellung der Lage nur wenige bewegbare Teile vorhanden, die auch keinen größeren Belastungen ausgesetzt sind,
wobei aber auch die jeweilige Arbeitsstellung bei sich in seiner Arbeitsstellung befindlichem Gerät noch verändert werden kann, indem das einstellbare Betätigungsglied von einer Leicht zugänglichen Stelle aus zu einer weiteren Lageänderung nur verstellt zu werden braucht.

In einfacher Weise ist der Bewegungsbereich der Schwinge an den Stellbereich des Betätigungselementes angepaßt, weshalb außerdem erfindungsgemäß vorgeschlagen wird, daß die Schwinge begrenzt schwenkbar am Rahmen angelenkt ist und ein Kontaktelement aufweist, gegen das im Bereich der Arbeitsstellungen des Gerätes ein an der Kolbenstange des Hubzylinders vorgesehener Ausleger zur Anlage kommt.

Hieraus folgt, daß die Schwinge unmittelbar von dem Hubzylinder aus betätigbar ist und nicht über eine Hubwelle, wobei eine Verstellung der Schwinge nur erfolgt, wenn der Hubzylinder sich einer Stellung nähert, die einer Arbeitsstellung des Gerätes entspricht.

Damit die Tiefenstellung des Gerätes leicht eingestellt werden kann, sieht die Erfindung noch vor, daß das Betätigungsglied einen Gewindeabschnitt zur Aufnahme einer Spannmutter aufweist, die an die Schwinge angeschlossen ist, und einenends mit einer Kontaktfläche zur Betätigung des Betätigungselements des Steuerventils und im Bereich des anderen Endes mit einer Dreheinrichtung versehen ist. Bei einer Betätigung der Dreheinrichtung, die eine Kurbel sein kann, verändert sich damit der Abstand zwischen Kontaktfläche und Spannmutter, so daß abhängig von der Drehrichtung das Steuerventil früher oder später anspricht. Die Dreheinrichtung läßt sich leicht an einer Stelle plazieren, die für eine Bedienungsperson bequem zugänglich ist.

Schließlich kann die Schwinge erfindungsgemäß dreieckförmig oder etwa dreieckförmig ausgebildet und an dem Raben vertikal schwenkbar angeschlossen sein, wobei die Schwenklagerstelle im Bereich der unteren Spitze vorgesehen ist, die Spannmutter an der oberen Spitze schwenkbar angelenkt ist und das Kontaktelement als ein gegen die Wirkung einer Feder in einem Zylinderteil an der vorderen Spitze der Schwinge verstellbarer Stift ausgebildet ist. Sollte sich die Schwinge aus irgendeinem Grund nicht oder nicht mehr verstellen lassen, obwohl die Kolbenstange den Stift verstellt, so kann der Stift infolge seiner Federbelastung nachgeben und Schäden werden vermieden.

Vorteilhaft kann rückwärtig der Schwenklagerstelle ein Anschlag an der Schwinge vorgesehen sein, der die Drehbewegung der Schwinge von dem Betätigungselement des Steuerventils fort begrenzt.

Dadurch, daß zwischen der Spannmutter und der Kontaktfläche auf dem Betätigungsglied ein Abstandshalter vorgesehen ist, wird die Verstellmöglichkeit des Betätigungsgliedes in einer Richtung begrenzt.

Zweckmäßig ist der Hubzylinder einseitig beaufschlagbar und verstellt bei Beaufschlagung das Gerät in seine Transportstellung, wobei das Steuerventil bei Verstellung seines Betätigungselementes durch das Betätigungsglied einen Rückfluß von Flüssigkeit aus den Hubzylinder unterbindet.

Schließlich kann das Betätigungsglied im Bereich seiner Dreheinrichtung noch mit einem Tiefenanzeiger versehen sein, über den sich die eingestellte Arbeitstiefe leicht erkennen läßt.

In der Zeichnung ist ein nachfolgend näher erläutertes Ausführungsbeispiel der Erfindung dargestellt. Es zeigt:
- Fig. 1: eine Höheneinstellvorrichtung für ein nur teilweise dargestelltes landwirtschaftliches Gerät und
- Fig. 2: einen Ausschnitt aus der Höheneinstellvorrichtung nach Fig. 1 in auseinandergezogener Darstellung und vergrößert.

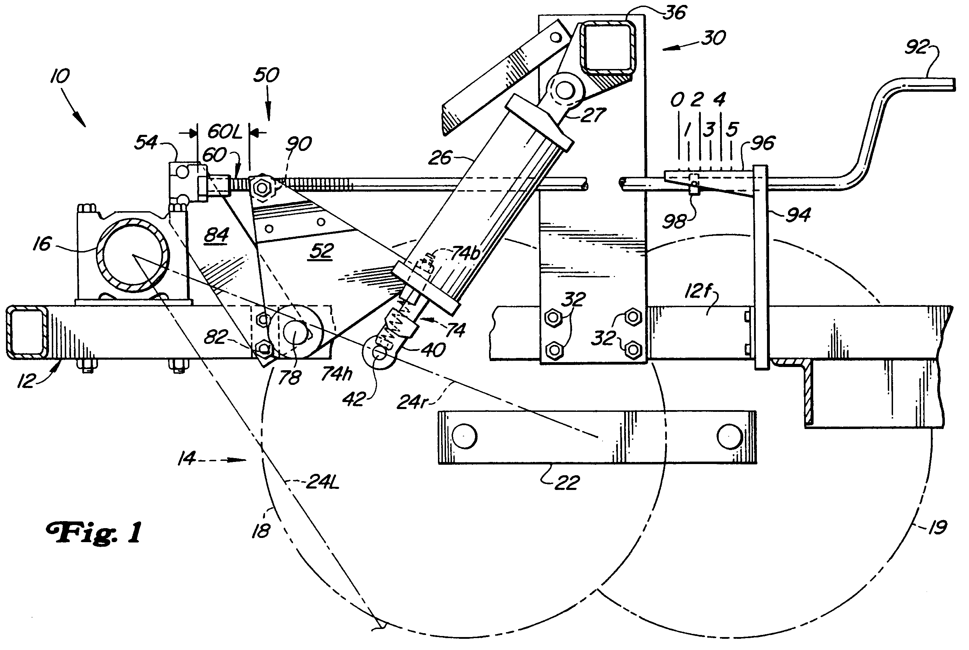

In Fig. 1 der Zeichnung ist ein Teil eines landwirtschaftlichen Arbeitsgerätes 10 mit einem Hauptrahmen 12 zu erkennen, der sich auf dem Boden über eine vertikal einstellbare Hubradeinrichtung 14 abstützt, die wiederum an einer Hubwelle 16 angreift. Die Hubradeinrichtung 14 besteht im wesentlichen aus zwei mit Bezug auf die Fahrtrichtung hintereinander liegenden Laufrädern 18 und 19, die an einem Träger 22 angeschlossen sind. Der Träger 22 seinerseits ist mit dem unteren Ende eines sich nach vorne und unten erstreckenden Hubarms 24 schwenkbar verbunden, dessen oberes Ende fest an die Hubwelle 16 angeschlossen ist, so daß bei einem Drehen der Hubwelle 16 um eine Querachse der Hubarm 24 zwischen einer angehobenen und in Fig. 1 mit 24 R bezeichneten Arbeitsstellung und einer abgesenkten und in Fig. 1 mit 24 L bezeichneten Transportstellung verstellbar ist.

Ein Hydraulikzylinder 26 weist ein zylinderseitiges Ende 27 auf, das an einen Mastbaum 30 angeschlossen ist. Der Mastbaum 30 ist über Schrauben 32 mit einem sich in Fahrtrichtung erstreckenden Holm 12f des Hauptrahmens 12 verbunden und weist einen Querbalken 36 auf, der sich über die Hubradeinrichtung 14 zu einer ähnlichen Verbindung mit einem zweiten in der Zeichnung der Einfachheit halber nicht dargestellten und sich ebenfalls in Fahrtrichtung erstreckenden Holm an der anderen Seite der Hubradeinrichtung 14 erstreckt. Eine mit einer Durchgangsbohrung versehene Lasche 37 schließt das zylinderseitige Ende 27 des Hydraulikzylinders an den Querbalken 36 schwenkbar an. Das kolbenseitige Ende 40 des Hydraulikzylinders 26 ist schwenkbar mit einem mittigen Abschnitt des Hubarms 24 über einen Stift 42 verbunden, der eine Verlängerung 42e aufweist, die sich quer in Richtung auf den Holm 12f erstreckt. Bei einem Einfahren des Kolbens in den Hubzylinder 26 wird der Hauptrahmen 12 mit Bezug auf die Bodenoberfläche abgesenkt, während bei einem Ausfahren des Kolbens aus dem Zylinder der Hauptrahmen angehoben wird. Damit kann das Gerät zwischen einer angehobenen Transportstellung und einer abgesenkten Arbeitsstellung für die Feldarbeit verstellt werden, wobei die Arbeitstiefe der an den Hauptrahmen 12 angeschlossenen Arbeitswerkzeuge noch in der Arbeitsstellung eingestellt werden kann.

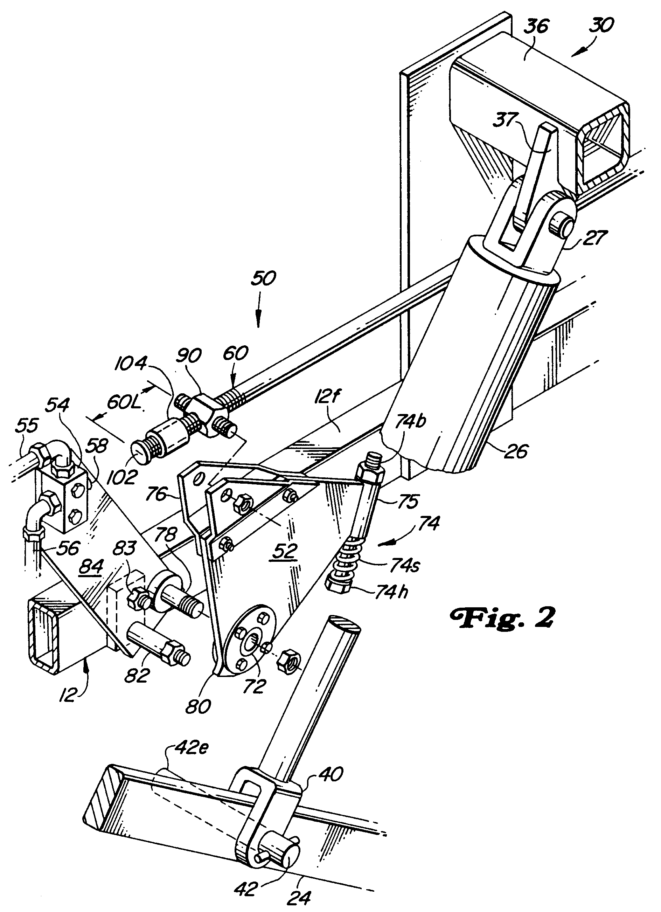

Um eine automatische Tiefensteuerung zu erreichen, die unmittelbar von einem Ausfahren des Kolbens aus dem Zylinder abhängig und mechanisch von einer leicht erreichbaren Stelle einstellbar ist, ist ein Tiefensteuerungssystem 50 mit dem Rahmen 12 im Bereich des Hydraulikzylinders 26 verbunden. Das Tiefensteuerungssystem 50 ist durch eine bewegliche oder drehbare Schwinge 52 geprägt. Aus Fig. 2 ist nun zu erkennen, daß die Schwinge 52 schwenkbar im Bereich des Zylinders 26 an den Hauptrahmen 12 anschließbar ist und auf ein Ausfahren des Zylinders anspricht. Desweiteren ist ein Steuerventil 54 vorgesehen, das über hydraulische Leitungen 55 und 56 an den Hydraulikzylinder 26 und an eine Druckflüssigkeitsquelle am nicht dargestellten ziehenden Fahrzeug zum Steuern des Zylinders 26 angeschlossen ist. Das Ventil 54 weist eine als Verschlußelement dienende Schiebesteuerung 58 odgl. auf, die in den Bereich der Schwinge 52 reicht. Ein einstellbares Betätigungsglied 60 wird von der Schwinge 52 getragen und ist zusammen mit der Schwinge auf einem Weg bewegbar, der die Schiebesteuerung 58 hemmt. Die Länge des Betätigungsgliedes 60 zwischen der Schwinge 52 und der Schiebesteuerung 58 (siehe 60 L in Fig. 2) ist von einer Stelle aus einstellbar, die von der Schwinge 52 weiter ab liegt, um eine einstellbare Rahmenarbeitshöhe zu erhalten, die unmittelbar von der Kolbenstangenstellung, wie es nachfolgend noch näher erläutert wird, abhängig ist.

Aus den Figuren ist zu erkennen, daß die Schwinge 52 etwa dreieckförmig ausgebildet ist und im Bereich der untersten Spitze eine Schwenklagerstelle 72 zum Anschluß an den einen Holm des Hauptrahmens 12 aufweist. An der nach vorne weisenden Seite der Schwinge ist ein über die Verlängerung 42e des Stiftes 42 betätigbares Kontaktelement 74 angeordnet. Beim bevorzugten Ausführungsbeispiel ist deshalb mit dieser Seite ein Zylinderteil 75 fest verbunden, in dem der Schaft einer Schraube 74b, deren Länge beträchtlich größer ist als die des Zylinderteils 75, verschiebbar ist. Über eine Feder 74s wird der Schaft der Schraube 74b derart nach unten gedrückt, daß, wenn die Schwinge 52 an den Hauptrahmen 12 angelenkt ist, der Schraubenkopf 74h in dem Bewegungsbereich der Verlängerung 42e liegt. Wird der Kolben des Zylinders 26 in den hydraulischen Zylinder 26 eingefahren, um den Rahmen 12 abzusenken, dann wird die Verlängerung 42e gegen den Schraubenkopf 74h zur Anlage kommen und die Schwinge 52 mit Bezug auf Fig. 2 entgegen dem Uhrzeigerdrehsinn verschwenken. Über eine Mutter ist die Schraube 74b gegen ein Herausrutschen aus dem Zylinderteil 75 gesichert.

Die obere Spitze der Schwinge 52 wird durch eine Bügellasche 76 bestimmt, die mit der Schwinge 52 verschraubt sein kann.

Es wurde bereits darauf verwiesen, daß die Schwinge 52 an den einen Holm des Hauptrahmens 12 anlenkbar ist, weshalb an diesem eine Welle 78 angeschlossen ist, damit die Schwinge 52 um eine quer verlaufende Achse verstellbar ist, die zu der der Hubwelle 16 parallel verläuft. Um die Drehbewegung der Schwinge 52 begrenzen zu können, ist die Schwenklagerstelle 72 der Schwinge noch mit einem nasenähnlichen Anschlag 80 versehen, der gegen einen ebenfalls am Hauptrahmen 12 angeordneten Schraubenhalter 82 zur Anlage kommen kann. Der Schraubenhalter 82 ist rückwärtig und unterhalb der Welle 78 vorgesehen, so daß eine nach vorne und nach unten gerichtete Drehbewegung der Schwinge 52 im Uhrzeigerdrehsinn begrenzt ist. Vorzugsweise ist der Anschlag 80 derart angeordnet, daß die Verlängerung 42e erst gegen den Schraubenkopf 74h fährt, wenn der Kolben soweit in den Zylinder 26 eingefahren ist, daß der Hauptrahmen 12 sich seinem Bereich für die Tiefensteuerung nähert. Die Feder 74s ist zusammendrückbar, damit sich der Schaft der Schraube 74s in dem Zylinderteil 75 verschieben kann, wenn sich die Schwinge 52 aus irgendeinem Grund nicht mehr entgegen dem Uhrzeugerdrehsinn verstellen läßt. Auf diese Weise werden mögliche Beschädigungen an den Komponenten vermieden.

Über den Schraubenhalter 82 und eine zweite Schraube 83 ist eine sich nach rückwärts und oben erstreckende Ventilhalterung 84 mit dem Holm 12f des Hauptrahmens 12 verbunden. An die Ventilhalterung 84 ist das Steuerventil 54 rückwärtig der Schwenkachse der Welle 72 auf einer Höhe angeschlossen, die etwa der höchsten Lage der Bügellasche 76 entspricht, wie es aus Fig. 1 zu ersehen ist. Eine Spannmutter 90 oder eine Hülse ist mit der Bügellasche 76 schwenkbar verbunden und mit Innengewinde versehen, um das mit Gewinde versehene Ende des Betätigungsgliedes 60 aufnehmen zu können.

Das vordere und in Fig. 1 dargestellte Ende des Betätigungsgliedes 60 ist als Dreheinrichtung in Form einer Kurbel 92 ausgebildet. Die Kurbel 92 ist an einer leicht zugänglichen Stelle vorgesehen und bei ihrer Betätigung dreht sich das Betätigungsglied 60 um seine Längsachse, wodurch die Einstellung der Tiefensteuerung geändert werden kann. Das vordere Ende des Betätigungsgliedes 60 wird noch von einer Lasche 94 aufgenommen, deren unteres Ende mit dem Holm 12f des Hauptrahmens 12 verschraubt ist. Außerdem ist an der Lasche 94 noch ein Tiefenanzeiger 94 vorgesehen, der mit einem an dem Betätigungsglied 60 fest angeordneten Ring 98 zusammenwirkt, um die gewählte Tiefeneinstellung anzeigen zu können. Das der Kurbel 92 abgelegene und mit Gewinde versehene Ende des Betätigungsgliedes 60 ist in die Spannmutter 90 eingedreht und tritt aus dieser an deren anderen Ende aus und ist an seiner Stirnfläche noch mit einer Kontaktfläche 102 ausgerüstet, über die die Schiebesteuerung des Steuerventils 54 betätigbar ist. Zwischen der Kontaktfläche 102 und der Spannmutter 90 befindet sich auf dem Betätigungsglied 60 noch ein Abstandshalter 104, der den Weg begrenzt, den das Betätigungsglied nach vorne mit Bezug auf die Spannmutter 90 verstellt werden kann.

Wird nun die Schwinge 52 durch die Verlängerung 42e bei einem Einfahren des Zylinders 26 zum Absenken des Arbeitsgerätes in seine Arbeitsstellung entgegen dem Uhrzeigerdrehsinn verschwenkt, dann wird das Betätigungsglied 60 durch die Spannmutter 90 nach rückwärts verstellt, wobei die Kontaktfläche gegen die Schiebesteuerung 58 zur Anlage kommt und diese ebenfalls verstellt. Durch eine solche Verstellung der Schiebesteuerung 58 wird der Rückfluß von Flüssigkeit aus den Zylinder 26 blockiert, wodurch ein weiteres Einfahren des Zylinders 26 verhindert ist.

Durch ein Drehen an der Kurbel 92 kann die Arbeitstiefe des Arbeitsgerätes eingestellt werden. Bei einer Vergrößerung des Abstandes 60 L wird die Schiebesteuerung 58 des Steuerventils bereits bei einem kleineren Drehwinkel der Schwinge 52 betätigt, wodurch eine geringere Arbeitstiefe eingestellt wird, die in einem größeren Abstand zwischen Hauptrahmen 12 und der Bodenoberfläche resultiert. Eine Verringerung des Abstandes 60 L bewirkt eine Verstellung der Schiebesteuerung 58 erst nach einem größeren Drehwinkel der Schwinge 52 und damit eine größere Arbeitstiefe. Auch, wenn sich das Arbeitsgerät bereits in seiner Arbeitsstellung befindet, kann die Kurbel des Betätigungsgliedes noch gedreht werden, um den Abstand 60 L und damit die Arbeitstiefe zu verändern. Durch Einstellung des Ringes 98 auf eine Markierung des Tiefenanzeigers 96 ist eine genaue und leicht wieder aufzufindende Tiefeneinstellung geschaffen, wenn das Gerät in seine Arbeitsstellung abgesenkt wird.

## Patentansprüche

1. Einen Rahmen (12) aufweisendes Gerät, insbesondere landwirtschaftliches Bodenbearbeitungsgerät, mit einer einen Hubzylinder (26) aufweisenden Hubeinrichtung zum Verstellen des Rahmens (12) zwischen einer Transportstellung und wenigstens einer Arbeitsstellung und mit einer einstellbaren Tiefensteuerung (50) für die jeweilige Arbeitsstellung, die eine in Abhängigkeit von der Stellung der Kolbenstange des Hubzylinders (26) mittel- oder unmittelbar verstellbare Schwinge (52) und ein Ventil (54) mit einem Betätigungselement (58) aufweist, wobei das Ventil (54) mit dem Hubzylinder (26) und mit einer Druckquelle verbunden ist und bei einer vorgegebenen Verstellung des Betätigungselementes (58) durch die Schwinge (52) eine Bewegung der Kolbenstange in wenigstens eine Richtung blockiert, dadurch gekennzeichnet, daß die Schwinge (52) am Rahmen (12) angelenkt ist und ein Betätigungsglied (60) aufnimmt, das mit der Schwinge (52) verstellbar ist, bei Verstellung der Schwinge (52) das Betätigungselement (58) des Ventils (54) verstellen kann und gegenüber der Schwinge (52) von einer Stelle aus verstellbar ist, die von der Schwinge (52) ab liegt.

2. Gerät nach Anspruch 1, dadurch gekennzeichnet, daß die Schwinge (52) begrenzt schwenkbar am Rahmen (12) angelenkt ist und ein Kontaktelement (74) aufweist, gegen das im Bereich der Arbeitsstellungen des Gerätes (10) ein an der Kolbenstange des Hubzylinders (26) vorgesehener Ausleger (42e) zur Anlage kommt.

3. Gerät nach Anspruch 1, dadurch gekennzeichnet, daß das Betätigungsglied (60) einen Gewindeabschnitt zur Aufnahme einer Spannmutter (90) aufweist, die an die Schwinge (52) angeschlossen ist, und einenends mit einer Kontaktfläche (102) zur Betätigung des Betätigungselements (58) des Steuerventils (54) und im Bereich des anderen Endes mit einer Dreheinrichtung versehen ist.

4. Gerät nach einem oder mehreren der vorherigen Ansprüche, dadurch gekennzeichnet, daß die Schwinge (52) dreieckförmig oder etwa dreieckförmig ausgebildet und an dem Rahmen (12) vertikal schwenkbar angeschlossen ist, wobei die Schwenklagerstelle (72) im Bereich der unteren Spitze vorgesehen ist, die Spannmutter (90) an der oberen Spitze schwenkbar angelenkt ist und das Kontaktelement (74) als ein gegen die Wirkung einer Feder (74s) in einem Zylinderteil (75) an der vorderen Spitze der Schwinge (52) verstellbarer Stift ausgebildet ist.

5. Gerät nach Anspruch 4, dadurch gekennzeichnet, daß rückwärtig der Schwenklagerstelle (72) ein Anschlag (80) an der Schwinge (52) vorgesehen ist, der die Drehbewegung der Schwinge (52) von dem Betätigungselement (58) des Steuerventils (54) fort begrenzt.

6. Gerät nach Anspruch 3, dadurch gekennzeichnet, daß zwischen der Spannmutter (90) und der Kontaktfläche (102) auf dem Betätigungsglied (60) ein Abstandshalter (104) vorgesehen ist.

7. Gerät nach einem oder mehreren der vorherigen Ansprüche, dadurch gekennzeichnet, daß der Hubzylinder (26) einseitig beaufschlagbar ist und bei Beaufschlagung das Gerät (10) in seine Transportstellung verstellt, wobei das Steuerventil (54) bei Verstellung seines Betätigungselementes (58) durch das Betätigungsglied (60) einen Rückfluß von Flüssigkeit aus den Hubzylinder (26) unterbindet.

8. Gerät nach Anspruch 3, dadurch gekennzeichnet, daß das Betätigungsglied (60) im Bereich seiner Dreheinrichtung mit einem Tiefenanzeiger (96) versehen ist.

## Claims

1. An implement with a frame (12), especially an agricultural ground-working implement, with a lift device having a lift cylinder (26) for adjusting the frame (12) between a transport position and at least one working position and with an adjustable depth control (50) for the current working position, which comprises a rocker (52) adjustable indirectly or directly in dependence on the position of the piston rod of the lift cylinder (26) and a valve (54) with an actuating element (58), wherein the valve (54) is connected to the lift cylinder (26) and to a pressure source and blocks movement of the piston rod in at least one direction on a predetermined movement of the actuating element (58) by the rocker (52), characterized in that the rocker (52) is pivoted on the frame (12) and receives an actuating member (60) which can be moved with the rocker (52) and can shift the actuating element (58) of the valve (54) with movement of the rocker (52) and is adjustable relative to the rocker (52) from a position which is remote from the rocker (52).

2. An implement according to claim 1, characterized in that the rocker (52) is pivoted on the frame (12) for limited pivotal movement and has a contact element (74), against which an arm (42e) provided on the piston rod of the lift cylinder (26) comes into abutment in the range of working settings of the implement (10).

3. An implement according to claim 1, characterized in that the actuating member (60) has a threaded section for reception of a nut (90) which is connected to the rocker (52) and is provided at one end with a contact surface (102) for actuating the actuating element (58) of the control valve (54) and with a rotating device in the region of the other end.

4. An implement according to one or more of the preceding claims, characterized in that the rocker (52) has a triangular or approximately triangular shape and is connected to the frame (12) to pivot vertically, the pivotal bearing point (72) being provided in the region of the lower corner, the nut (90) being pivotally mounted at the upper corner and the contact element (74) being the form of a rod movable against the bias of a spring (74s) in a cylindrical part (75) at the front corner of the rocker (52).

5. An implement according to claim 4, characterized in that a stop (80) is provided on the rocker (52) to the rear of the pivotal bearing point (72) and limits the rotary movement of the rocker (52) away from the actuating element (58) of the control valve (54).

6. An implement according to claim 3, characterized in that a spacer (104) is provided on the actuating member (60) between the nut (90) and the contact surface (102).

7. An implement according to one or more of the preceding claims, characterized in that the lift cylinder (26) is single acting and when pressurised moves the implement (10) into its transport position, while the control valve (54) prevents return flow of fluid from the lift cylinder (26) when its actuating element (58) is moved by the actuating member (60).

8. An implement according to claim 3, characterized in that the actuating member (60) is provided with a depth indicator (96) in the region of its turning device.

## Revendications

1. Appareil comportant un cadre (12), notamment engin agricole du travail du sol, comportant un dispositif de levage possédant un vérin de levage (26) et servant à déplacer le cadre (12) entre une position de transport et au moins une position de travail, et comportant une unité réglable (50) de commande de profondeur pour la position de travail respective, qui comporte un organe basculant (52) réglable indirectement ou directement en fonction de la position de la tige de piston du vérin de levage (26), et une soupape (54) comportant un élément d'actionnement (58), et dans laquelle la soupape (54) est reliée au vérin de levage (26) et à une source de pression et, dans le cas d'un déplacement prédéterminé de l'élément d'actionnement (58) au moyen de l'organe basculant (52), bloque un déplacement de la tige de piston dans au moins une direction, caractérisé en ce que l'organe basculant (52) est articulé sur le cadre (12) et comporte un organe d'actionnement (60), qui est déplaçable à l'aide de l'organe basculant (52), peut déplacer l'élément d'actionnement (58) de la soupape (54), lors du déplacement de l'organe basculant (52), et peut être déplacé par rapport à l'organe basculant (52), à partir d'un emplacement qui est éloigné de l'organe basculant (52).

2. Appareil selon la revendication 1, caractérisé en ce que l'organe basculant (52) est articulé de manière à pivoter de façon limitée sur le cadre (12) et possède un élément de contact (74), contre lequel vient s'appliquer, dans la zone des positions de travail de l'appareil (10), un bras en console (42e) prévu sur la tige de piston du vérin de levage (26).

3. Appareil selon la revendication 1, caractérisé en ce que l'organe d'actionnement (60) possède une section filetée servant à recevoir un écrou de serrage (90), qui est raccordé à l'organe basculant (52), et comporte, à une extrémité, une surface de contact (102) servant à actionner l'élément d'actionnement (58) de la soupape de commande (54) et, dans la zone de l'autre extrémité, un dispositif d'entraînement en rotation.

4. Appareil selon une ou plusieurs des revendications précédentes, caractérisé en ce que l'organe basculant (52) est agencé avec une forme triangulaire ou approximativement triangulaire et est raccordé au cadre (12), de manière à pouvoir pivoter verticalement, le point formant palier de pivotement (72) étant prévu au niveau de la pointe inférieure, l'écrou de serrage (90) étant articulé de manière à pouvoir pivoter sur la pointe supérieure, et l'élément de contact (74) étant agencé sous la forme d'une tige déplaçable, sous l'action d'un ressort (74s), dans une partie cylindrique (75) située sur la pointe avant de l'organe basculant (52).

5. Appareil selon la revendication 4, caractérisé en ce que sur le côté arrière du point formant palier de pivotement (72) est prévue, sur l'organe basculant (52), une butée (80), qui limite la poursuite du mouvement de rotation de l'organe basculant (52) à partir de l'élément d'actionnement (58) de la soupape de commande (54).

6. Appareil selon la revendication 3, caractérisé en ce qu'une entretoise (104) est prévue sur l'organe d'actionnement (60) entre l'écrou de serrage (90) et la surface de contact (102).

7. Appareil selon une ou plusieurs des revendications précédentes, caractérisé en ce que le vérin de levage (26) peut être chargé unilatéralement et, lorsqu'il est chargé, l'appareil (10) est amené dans sa position de transport, la soupape de commande (54), lors du déplacement de son élément d'actionnement (58) par l'organe d'actionnement (60) cette soupape empêchant un reflux du liquide à partir du vérin de levage (26).

8. Appareil selon la revendication 3, caractérisé en ce que l'organe d'actionnement (60) comporte, au niveau de son dispositif d'entraînement en rotation, un dispositif d'indication de profondeur (96).
